# EUROPEAN PATENT APPLICATION

(11) **EP 4 556 912 A1**
(43) Date of publication of application: **21.05.2025**
(21) Application number: 24213115.9
(22) Date of filing: 14.11.2024
(51) Int. Cl.: G01N 35/00, G01N 35/04, G01N 35/10

(54) **AUTOMATIC ANALYZER**

(30) Priority: 17.11.2023 JP 2023195935
(71) Applicant: Canon Medical Systems Corporation, Tochigi (JP)
(72) Inventor: JIFUKU, Yoshihiro, Otawara-shi (JP); MATSUMOTO, Satoshi, Otawara-shi (JP); MATSUDA, Isamu, Otawara-shi (JP); KODAMA, Kiwamu, Otawara-shi (JP); UENO, Gaku, Otawara-shi (JP); GOTO, Takashi, Otawara-shi (JP); KAWASHIMA, Shohei, Otawara-shi (JP); HONDA, Tamaki, Otawara-shi (JP); SAITO, Yuta, Otawara-shi (JP)
(74) Representative: Marks & Clerk LLP

(57) **Abstract**

An automatic analyzer (10) includes a transporter (24), a first dispensing probe (251), a second dispensing probe (261), and a control unit (11). The transporter (24) transports a reaction tube for sample (41) and a reaction tube for transfer (42). The first dispensing probe (251) dispenses a mixed solution including a sample. The second dispensing probe (261) dispenses a reagent or a diluent solution. The control unit (11) controls the first dispensing probe (251) so as to suck the mixed solution from the reaction tube for sample (41) in a first cycle and discharge the mixed solution into the reaction tube for transfer (42) in a second cycle if an amount of the mixed solution to be transferred from the reaction tube for sample (41) to the reaction tube for transfer (42) is greater than a threshold value.

## Description

### CROSS REFERENCE TO RELATED APPLICATIONS

This application is based upon and claims the benefit of priority from the prior Japanese Patent Application No. 2023-195935, filed on November 17, 2023, the entire contents of which are incorporated herein by reference.

### FIELD

Embodiments described herein and illustrated in the drawings relate to an automatic analyzer.

### BACKGROUND

Automatic analyzers for performing qualitative or quantitative analyses of samples such as blood or urine are known. When an analysis is performed in a two reagent system, a first reagent is dispensed to a reaction tube containing a sample. After a predetermined time elapses, a second reagent is dispensed to the reaction tube. After a further predetermined time elapses since the second reagent is dispensed, a predefined measurement is performed by a measuring unit. The period of time from the time when the first reagent is dispensed to the reaction tube to the time when the second reagent is dispensed to the reaction tube, and the period of time from the time when the second reagent is dispensed to the reaction tube to the time when the measurement is performed by the measuring unit are determined by an operation cycle of a reaction disk that holds reaction tubes and moves the reaction tubes to respective dispensing positions or measurement positions. For example, the period of time from the time when the first reagent is dispensed to the reaction tube to the time when the second reagent is dispensed to the reaction tube may be five minutes, and the period of the from the time when the second reagent is dispensed to the reaction tube to the time when the measurement is performed by the measuring unit may be five minutes.

Depending on the type of measurement item, a longer time (for example, 10 minutes) may be needed for the period of time from the time when the second reagent is dispensed to the reaction tube to the time when the measurement is performed by the measuring unit. In order to elongate the period of time, the timing at which the second reagent is dispensed to the reaction tube may be advanced. For example, after the sample is dispensed to the reaction tube, the first reagent is dispensed at the timing when the diluent solution is dispensed in the conventional cases. Thereafter, the sample and the reagent in the reaction tube are transferred to another reaction tube using a probe, and a second reagent is dispensed to the other reaction tube at the timing when the first reagent is dispensed in conventional cases. As a result, the timing at which the second reagent is dispensed to the reaction tube may be advanced.

Generally, the processing time of one cycle in an automatic analyzer is fixed. Therefore, the amount of fluid transferred using a probe within one cycle is limited. This may mean that if the amount of fluid to be transferred using a probe is too much, the transfer may not be finished within one cycle. In order to solve this problem, the pump connected to the probe may be changed to one that sucks and discharges a fluid at a high speed. However, this may decrease the stability in measurements performed by the automatic analyzer.

One of the problems to be solved by one or more embodiments described herein or illustrated in the drawings is to suitably perform a transfer operation by using a probe even if the amount of fluid to be transferred from a reaction tube to another reaction tube is greater than a predetermined amount. The problems to be solved by the one or more embodiments described herein or illustrated in the drawings are not limited to the above-described problem. There may be other problems such as those corresponding to the advantages or effects of the embodiments described below.

### SUMMARY OF THE INVENTION

An automatic analyzer including:
a transporter configured to transport a reaction tube for sample and a reaction tube for transfer;
a first dispensing probe configured to dispense a mixed solution including a sample;
a second dispensing probe configured to dispense a reagent or a diluent solution; and
a control unit configured to control the first dispensing probe so as to suck the mixed solution from the reaction tube for sample in a first cycle and to discharge the mixed solution into the reaction tube for transfer in a second cycle if an amount of the mixed solution to be transferred from the reaction tube for sample to the reaction tube for transfer is greater than a threshold value.

The control unit may control the first dispensing probe so as to suck the mixed solution from the reaction tube for sample and to discharge the mixed solution into the reaction tube for transfer in a single cycle if the amount of the mixed solution to be transferred from the reaction tube for sample to the reaction tube for transfer is equal to or less than the threshold value.

The control unit may control the second dispensing probe so as to dispense either the reagent or the diluent solution according to a user's setting.

The control unit may control the second dispensing probe so as to dispense either a first reagent or a second reagent according to a user's setting.

The automatic analyzer may be configured to have a function to set the threshold value for each of measurement items.

The automatic analyzer may be configured to have a function to dispense either the reagent or the diluent solution using the second dispensing probe.

The automatic analyzer may be configured to have a function to set whether a first reagent or a second reagent is dispensed using the second dispensing probe.

The automatic analyzer may be configured to have a function to set the threshold value on a settings screen for setting measurement items.

The automatic analyzer may be configured to have a function to set whether the reagent or the diluent solution is dispensed using the second dispensing probe on a measurement request screen for setting measurement items.

A method for transferring a mixed solution in an automatic analyzer including:
a transporter configured to transport a reaction tube for sample and a reaction tube for transfer;
a first dispensing probe configured to dispense a mixed solution including a sample; and
a second dispensing probe configured to dispense a reagent or a diluent solution, the method including:
   a transferring step including:
   sucking the mixed solution from the reaction tube for sample in a first cycle and discharging the mixed solution into the reaction tube for transfer in a second cycle if an amount of the mixed solution to be transferred from the reaction tube for sample to the reaction tube for transfer is greater than a threshold value.

The method for transferring a mixed solution in an automatic analyzer may include:
another transferring step including:
sucking the mixed solution from the reaction tube for sample and discharging the mixed solution into the reaction tube for transfer in a single cycle if the amount of the mixed solution to be transferred from the reaction tube for sample to the reaction tube for transfer is equal to or less then the threshold value.

The method for transferring a mixed solution in an automatic analyzer may include:
a determining step performed by a control unit included in the automatic analyzer before the transferring step, the determining step including:
determining whether the amount of the mixed solution to be transferred from the reaction tube for sample to the reaction tube for transfer is greater than the threshold value.

### BRIEF DESCRIPTION OF THE DRAWINGS

FIG. 1 is a block diagram illustrating an example of a configuration of an automatic analyzer.
FIG. 2 illustrates an example of functions of an analysis controller of the automatic analyzer.
FIG. 3 illustrates an example of a configuration of an analysis executor of the automatic analyzer.
FIG. 4 illustrates an example of an operation sequence when a diluting operation is performed.
FIG. 5 shows an example of an operation sequence when a reaction time-extended measurement is performed.
FIG. 6 is a flowchart showing an example of a dispensing method according to an embodiment.
FIG. 7 is a flowchart showing the example of the dispensing method according to the embodiment.
FIG. 8 is a flowchart showing the example of the dispensing method according to the embodiment.
FIG. 9 illustrates an example of a setting screen of the automatic analyzer.
FIG. 10 illustrates an example of a setting screen of the automatic analyzer.
FIG. 11 illustrates an example of a setting screen of the automatic analyzer.
FIG. 12 illustrates an example of a setting screen of the automatic analyzer.
FIG. 13 illustrates an example of a setting screen of the automatic analyzer.
FIG. 14 is a diagram for explaining the transport of a reaction tube by a transporter.
FIG. 15 is a diagram for explaining the transport of the reaction tube by the transporter.
FIG. 16 is a diagram for explaining the transport of the reaction tube by the transporter.
FIG. 17 is a diagram for explaining the transport of the reaction tube by the transporter.
FIG. 18 illustrates another example of an operation sequence of the automatic analyzer, using a third reagent.
FIG. 19 illustrates an example of a setting screen of the automatic analyzer when a measurement using the third reagent is performed.
FIG. 20 illustrates an example of a setting screen of the automatic analyzer when the measurement using the third reagent is performed.

### DETAILED DESCRIPTION

Embodiments will now be described with reference to the accompanying drawings. The scaling and the ratio between dimensions of an element may be different from those of the actual element in each drawing, for the easy understanding and the convenience of illustration.

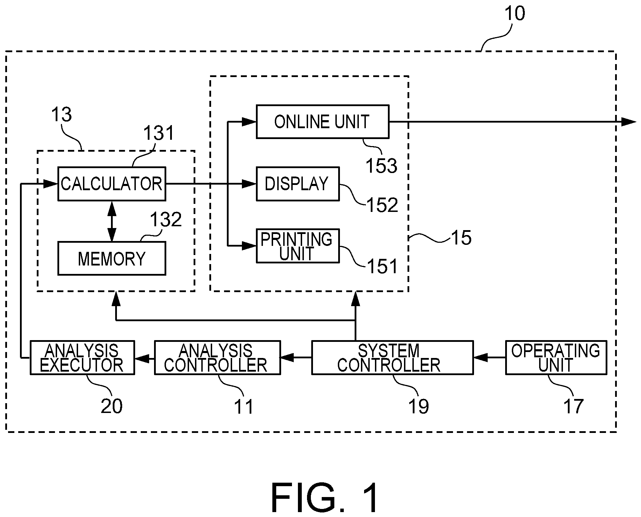

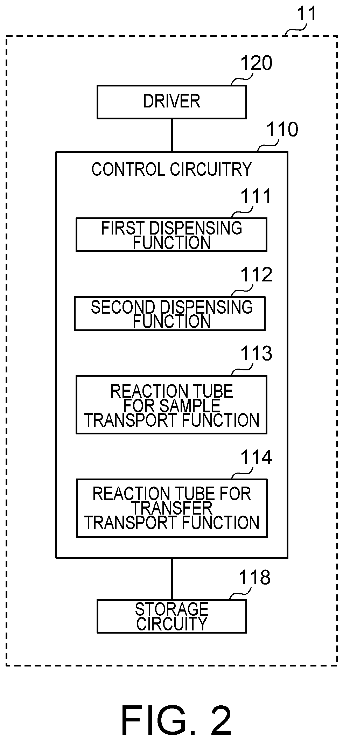

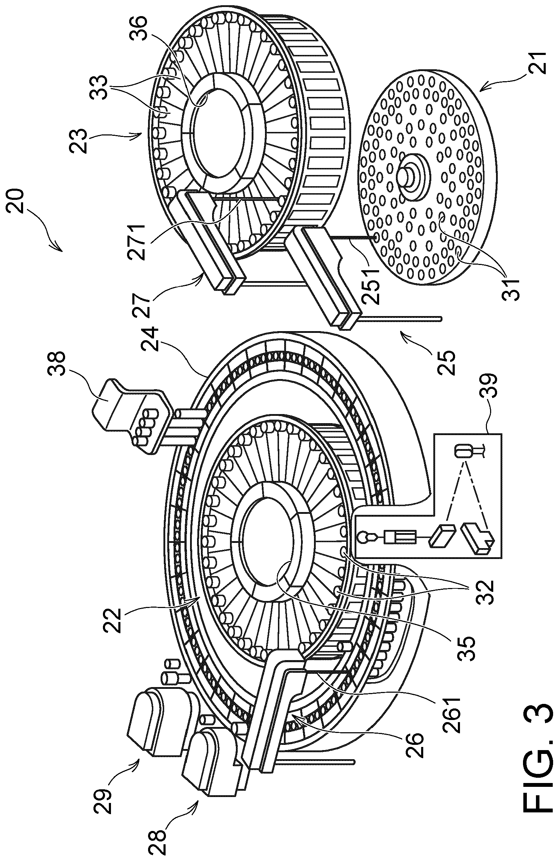

FIG. 1 is a block diagram showing an example of a configuration of an automatic analyzer 10. FIG. 2 illustrates an example of functions of an analysis controller 11 of the automatic analyzer 10. FIG. 3 illustrates an example of a configuration of an analysis executor 20 of the automatic analyzer 10.

The automatic analyzer 10 includes the analysis executor 20, the analysis controller 11, an analysis data processor 13, an output unit 15, an operating unit 17, and a system controller 19. The analysis executor 20 measures and analyzes a sample to be tested and a calibrator. The analysis controller 11 controls the analysis executor 20. The analysis data processor 13 processes an analysis signal outputted from the analysis executor 20 to calculate analysis data. The output unit 15 outputs the analysis data sent from the analysis data processor 13. The operating unit 17 receives inputs of analysis conditions and command signals. The system controller 19 controls the above-described components.

The analysis data processor 13 includes a calculator 131 that produces a calibration table from such signals as a calibration signal and an analysis signal outputted from the analysis executor 20 and calculates the analysis data, and a memory 132 that stores the calibration table produced by the calculator 131 and the analysis data calculated by the calculator 131.

The calculator 131 produces a calibration table of each item based on a calibration signal relating to each item outputted from the analysis executor 20, and outputs the calibration table to the output unit 15 and also stores the calibration table in the memory 132. Furthermore, the calculator 131 reads out a calibration table from the memory 132, the calibration table corresponding to an item of the analysis signal outputted from the analysis executor 20, and calculates analysis data using the calibration table and outputs the analysis data to the output unit 15 and also stores the analysis data in the memory 132.

The memory 132 includes a hard disk, for example, and stores the calibration table and the analysis data for each sample to be tested outputted from the calculator 131.

The output unit 15 includes a printing unit 151 that prints and outputs the calibration table and the analysis data outputted from the analysis data processor 13, a display 152 that displays and outputs the calibration table and the analysis data, and an online unit 153 that outputs the analysis data and the calibration table to an external system such as an information system. The printing unit 151 includes a printer, for example, and prints the calibration table and the analysis data outputted from the analysis data processor 13 on a sheet of printing paper based on a predetermined format. The display 152 includes a monitor such as a cathode ray tube (CRT), a liquid crystal display monitor, or an organic EL display monitor, and displays the calibration table and the analysis data outputted from the analysis data processor 13, and also displays a screen used for the settings of the analysis conditions as instructed by the system controller 19.

The operating unit 17 includes an input device such as a keyboard, a mouse device, buttons, or a touch panel. As a result of an input, analysis conditions may be set, information of an object to be tested such as the ID and the name of the object to be tested may be inputted, measurement items for each sample to be tested of the object to be tested may be selected, and various operations such as a calibration of each item and an analysis of each sample to be tested may be performed.

The system controller 19 includes a CPU and storage circuity that are not shown in the drawing. After storing information such as a command signal of an operator supplied from the operating unit 17, analysis conditions, information of the object to be tested, and measurement items of each sample to be tested, the system controller 19 performs the control of the entire system such as the control of the respective components of the analysis executor 20 to operate in a predetermined cycle of a predetermined sequence, and the control relating to the generation of a calibration table and the calculation and output of the analysis data.

The analysis executor 20 analyzes samples. In particular, the analysis executor 20 generates blank data using blank measurement, reference data using reference measurement for measuring a mixed solution including a reference sample for each test item and a reagent used in the analysis for each test item, and test data using measurement of a mixed solution including a sample to be tested and the reagent. The analysis executor 20 includes a sample disk 21, a reagent carousel 22, a reagent carousel 23, a transporter (reaction disk) 24, a first dispenser 25, a second dispenser 26, a third dispenser 27, a first agitation mechanism 28, and a second agitation mechanism 29.

The sample disk 21 includes a plurality of sample containers 31, each of which contains a sample such as a reference sample or a sample to be tested, for example blood serum. The sample containers 31 are mounted on a sample rack, for example, and stored in the sample disk 21. One sample rack may have one or more sample containers 31.

The reagent carousel 22 includes a reagent rack 35 that stores a plurality of reagent containers 32 in a rotatable manner. The reagent rack 35 stores and cools a first reagent contained in the reagent containers 32. The first reagent in the reagent containers 32 is of a one-reagent system or two-reagent system, for example, and reacts with a component of a test item included in the sample such as a reference sample or a sample to be tested. The reagent carousel 23 includes a reagent rack 36 that stores a plurality of reagent containers 33 in a rotatable manner. The reagent rack 36 stores and cools a second reagent contained in the reagent containers 33. Each reagent container 33 thus contains the second reagent that is used with the first reagent. The reagent rack 35 may store both the reagent containers 32 containing the first reagent and the reagent containers 33 containing the second reagent.

The transporter (reaction disk) 24 has a plurality of fixing tools that are detachably attached on the circumference of the reaction disk 24. The fixing tools hold a plurality of reaction tubes 41 and 42 at predetermined intervals on the circumference of the transporter 24. Thus, the transporter 24 includes the fixing tools for fixing the reaction tubes 41 and 42, and holds the reaction tubes 41 and 42 in a movable manner.

The first dispenser 25 includes a first dispensing probe 251, an arm, and a cleaning pool. The first dispensing probe 251 is used for a dispensing operation including a suction of a sample in a sample container 31 in the sample disk 21 and a discharge of the sample into a reaction tube 41. The first dispensing probe 251 is also used for a dispensing operation including a suction of a mixed solution in the reaction tube 41 and a discharge of the mixed solution into the reaction tube 42. The arm holds the first dispensing probe 251 in a rotatable and vertically movable manner. The cleaning pool is used for cleaning the first dispensing probe 251 every time the dispensing of the sample from the first dispensing probe 251 is finished.

The second dispenser 26 includes a second dispensing probe 261, an arm, and a cleaning pool. The second dispensing probe 261 is used for a dispensing operation including a suction of the first reagent in one of the reagent containers 32 stored in the reagent rack 35 and a discharge of the first reagent into the reaction tubes 41 and 42 to which the sample is discharged. The second dispensing probe 261 may also be used for a dispensing operation including a suction of a diluent solution and a discharge of the diluent solution into the reaction tubes 41 and 42 to which the sample is discharged. The arm holds the second dispensing probe 261 in a rotatable and vertically movable manner. The cleaning pool is used for cleaning the second dispensing probe 261 every time the dispensing of one of the reagents from the second dispensing probe 261 is finished.

The third dispenser 27 includes a third dispensing probe 271, an arm, and a cleaning pool. The third dispensing probe 271 is used for a dispensing operation including a suction of the second reagent in one of the reagent containers 33 stored in the reagent rack 36 and a discharge of the second reagent into the reaction tubes 41 and 42. The arm holds the third dispensing probe 271 in a rotatable and vertically movable manner. The cleaning pool is used for cleaning the third dispensing probe 271 every time the dispensing of one of the reagents from the third dispensing probe 271 is finished.

The first agitation mechanism 28 includes an agitator, an arm, and a cleaning pool. The agitator agitates the mixed solution including the sample and the first reagent that have been dispensed into the reaction tubes 41 and 42. The arm holds the agitator in a rotatable and vertically movable manner. The cleaning pool is used for cleaning the agitator every time the agitation of the mixed solution is finished.

The second agitation mechanism 29 includes an agitator, an arm, and a cleaning pool. The agitator agitates the mixed solution including the sample, the first reagent, and the second reagent that have been dispensed into the reaction tubes 41 and 42. The arm holds the agitator in a rotatable and vertically movable manner. The cleaning pool is used for cleaning the agitator every time the agitation of the mixed solution is finished.

The automatic analyzer 10 further includes a reaction tube cleaning mechanism 38, and a measuring unit 39. The measuring unit 39 measures light passing through the reaction tubes 41 and 42 containing a fluid such as water or a solution such as the mixed solution. The reaction tube cleaning mechanism 38 performs a cleaning operation for cleaning and drying the insides of the reaction tubes 41 and 42 for which the measuring unit 39 has finished the measurement of the mixed solution, for example. The reaction tube cleaning mechanism 38 also pours a blank fluid such as pure water to the cleaned reaction tubes 41 and 42 for blank measurement.

The measuring unit 39 generates blank data by performing a blank measurement for detecting light passing through the reaction tubes 41 and 42 into which the blank fluid has been dispensed. The measuring unit 39 also generates reference data by performing a reference measurement for detecting the light passing through the mixed solution including the reference sample and the reagent in the reaction tubes 41 and 42. The measuring unit 39 further generates test data by performing a test measurement for detecting the light passing through the mixed solution including the sample to be tested and the reagents in the reaction tubes 41 and 42.

The analysis controller 11 controls the respective components of the analysis executor 20. For example, the analysis controller 11 sequentially assigns test items to the reaction tubes 41 and 42 that have been cleaned through a cleaning operation performed by the reaction tube cleaning mechanism 38. The test items are selected and inputted for respective samples to be tested. The analysis controller 11 then causes the reaction tube cleaning mechanism 38 to pour a blank fluid to the reaction tubes 41 and 42 to which the test items have been assigned. The amount of the blank fluid corresponds to the sum of the amount of the dispensed sample set as an analysis parameter of the test items and the amount of the dispensed reagents. Subsequently, the analysis controller 11 causes the measuring unit 39 to perform a blank measurement of the reaction tubes 41 and 42 containing the blank fluid, thereby generating blank data.

The analysis controller 11 includes control circuitry 110, storage circuity 118, and a driver 120. The driver 120 is controlled by the control circuitry 110 to drive the analysis executor 20. The driver 120 includes, for example, a gear, a stepping motor, a belt conveyor system, and a lead screw. For example, the driver 120 separately rotates the sample disk 21, the reagent rack 35, and the reagent rack 36 to move the sample container 31, the reagent container 32, and the reagent container 33. The driver 120 rotatably drives the transporter (reaction disk) 24 to move the reaction tubes 41 and 42. The driver 120 also separately drives the respective arms vertically and rotatably to move the first dispensing probe 251 and the second dispensing probe 261.

The storage circuity 118 stores a program for at least performing a function of the control circuitry 110. In addition to such a program, the storage circuity 118 may store other programs and information such as data inputted via the operating unit 17 and data generated in the analysis executor 20. The storage circuity 118 includes a recording medium that can be read by a processor such as a magnetic or optical recording medium or a semiconductor memory. The storage circuity 118 is not necessarily formed of a single storage device. For example, the storage circuity 118 may include a plurality of storage devices.

The control circuitry 110 is a processor that is a main component of the automatic analyzer 10. The control circuitry 110 executes the program stored in the storage circuity 118 to perform one or more functions corresponding to the executed program. The control circuitry 110 may have a memory region for storing at least a portion of data stored in the storage circuity 118. As shown in FIG. 2, the control circuitry 110 executes the program stored in the storage circuity 118 to have, for example, a first dispensing function 111, a second dispensing function 112, a reaction tube for sample transport function 113, and a reaction tube for transfer transport function 114. In the embodiments described below, a single processor performs the first dispensing function 111, the second dispensing function 112, the reaction tube for sample transport function 113, and the reaction tube for transfer transport function 114, but this it not a limited feature. For example, a plurality of independent processors may be combined to form the control circuitry, and the respective functions may be realized by the respective processors executing programs.

In each embodiment described herein, the first dispensing function 111 of the control circuitry 110 acts as a first dispenser, the second dispensing function 112 acts as a second dispenser, the reaction tube for sample transport function 113 acts as a reaction tube for sample transporter, and the reaction tube for transfer transport function 114 acts as a reaction tube for transfer transporter.

The first dispensing function 111 controls the first dispensing probe 251 to dispense a mixed solution including a reagent to a reaction tube. For example, when the first dispensing function 111 is performed, the control circuitry 110 controls the first dispensing probe 251 to dispense the mixed solution including a reagent from a reaction tube for sample 41 to a reaction tube for transfer 42.

The second dispensing function 112 controls the second dispensing probe 261 to dispense the reagent or the diluent solution to a reaction tube. For example, when the second dispensing function 112 is performed, the control circuitry 110 controls the second dispensing probe 261 to dispense at least one of the first reagent contained in one of the reagent containers 32 and the second reagent contained in one of the reagent containers 33 into at least one of the reaction tubes 41 and 42. When the second dispensing function 112 is performed, the control circuitry 110 may control the second dispensing probe 261 so as to dispense the diluent solution to at least one of the reaction tubes 41 and 42.

The reaction tube for sample transport function 113 controls the transporter (reaction disk) 24 to transport the reaction tube for sample 41. For example, when the reaction tube for sample transport function 113 is performed, the control circuitry 110 controls the transporter 24 to move the reaction tube for sample 41 from a second dispensing position 242 to a sucking position 245, as will be described later.

The reaction tube for transfer transport function 114 controls the transporter (reaction disk) 24 to transport the reaction tube for transfer 42. For example, when the reaction tube for transfer transport function 114 is performed, the control circuitry 110 controls the transporter 24 to move the reaction tube for transfer 42 from a first dispensing position 241 to the second dispensing position 242.

Next, the embodiments of the disclosure will be described with reference to the accompanying drawings. In the embodiments, the reaction tube for sample 41and the reaction tube for transfer 42 are used as the reaction tubes 41 and 42.

In an automatic analyzer 10, the transporter 24 repeatedly moves (rotates) and stops to intermittently transport the reaction tubes 41 and 42 held in the transporter 24. During a period of time when the transporter 24 stops, various operations relating to the reaction tubes 41 and 42 are performed. Examples of such operations include discharge of a fluid such as a sample, a reagent, or a diluent solution into the reaction tubes 41 and 42, suction of the fluid from the reaction tubes 41 and 42, agitation of the fluid in the reaction tubes 41 and 42, and measurement of the fluid in the reaction tubes 41 and 42. One movement and one stop of the transporter 24 constitute one cycle.

In the automatic analyzer 10 according to one or more embodiments, five cycles correspond to about one full rotation of the transporter 24. In other words, the reaction tubes 41 and 42 are stopped and subjected to any kind of operation every time these tubes are moved by about 1/5 of the full rotation. It is not necessary that any operation is performed on the reaction tubes 41 and 42 in each cycle. Therefore, there may be a cycle during the stop period of which no operation is performed on the reaction tubes 41 and 42. The automatic analyzer 10 is not limited to the ones in which the transporter 24 makes about a full rotation with five cycles, but may be configured such that the transporter 24 makes about a full rotation with one to four cycles, or six or more cycles.

In such an embodiment, after five cycles, the reaction tubes 41 and 42 are moved to positions that are advanced from the original positions by the width of one reaction tube. Therefore, the positions of the reaction tubes 41 and 42 are shifted in the travelling direction (downstream) by the width of one reaction tube. The length of the shift is not limited to this and the positions of the reaction tubes 41 and 42 may be shifted by the width of two or more reaction tubes during a predetermined number of cycles (five in the embodiment) corresponding to about one full rotation. The reaction tubes 41 and 42 may be moved to positions that are shifted from the original positions in the backward direction after a predetermined number of cycles corresponding to about one full rotation.

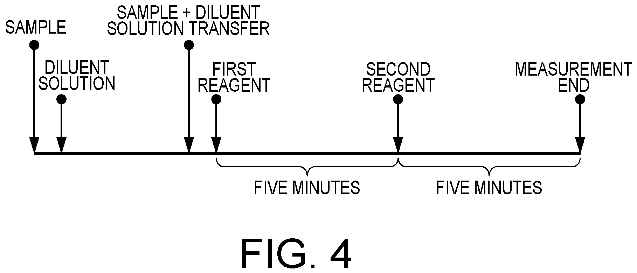

FIG. 4 shows an example of an operation sequence of the automatic analyzer 10 performing a diluting operation. In the example shown in FIG. 4, one cycle after a sample is dispensed to the reaction tube for sample 41, a diluent solution is dispensed to the reaction tube for sample 41. Five cycles (about one rotation) after the dispensing of the sample, a mixed solution including the sample and the diluent solution is transferred from the reaction tube for sample 41 to the reaction tube for transfer 42. After one further cycle, a first reagent is dispensed to the reaction tube for transfer 42. About five minutes after the dispensing of the first reagent, a second reagent is dispensed to the reaction tube for transfer 42. About five minutes after the dispensing of the second reagent, the measuring unit 39 performs a measurement. Therefore, in the example shown in FIG. 4, the reaction time from the dispensing of the second reagent to the measurement performed by the measuring unit 39 is about five minutes.

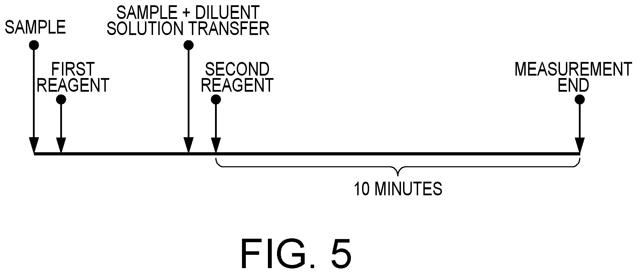

Depending on the type of measurement item, there may be a case where a longer time is needed from the dispensing of the second reagent into the reaction tube to the measurement of the measuring unit 39. For this purpose, a reaction time-extended measurement may be performed, in which the timing at which the second reagent is dispensed to the reaction tube may be advanced to elongate the reaction time. FIG. 5 shows an example of an operation sequence of the automatic analyzer 10 when a reaction time-extended measurement is performed.

In the example shown in FIG. 5, the first reagent is dispensed at the timing when the diluent solution is dispensed in the example shown in FIG. 4, and the second reagent is dispensed at the timing when the first reagent is dispensed in the example shown in FIG. 4. Specifically, one cycle after the sample is dispensed to the reaction tube for sample 41, the first reagent is dispensed to the reaction tube for sample 41. Five cycles (about one full rotation) after the dispensing of the first reagent, the mixed solution including the sample and the first reagent is transferred from the reaction tube for sample 41 to the reaction tube for transfer 42. After one more cycle, the second reagent is dispensed to the reaction tube for transfer 42. About 10 minutes after the dispensing of the second reagent, the measuring unit 39 performs a measurement. Therefore, in the example show in FIG. 5, the reaction time from the dispensing of the second reagent to the measurement by the measuring unit 39 is about 10 minutes. As a result, the reaction time from the dispensing of the second reagent to the measurement by the measuring unit 39 can be extended without changing the time from the dispensing of the sample to the reaction tube for sample 41 to the measurement by the measuring unit 39.

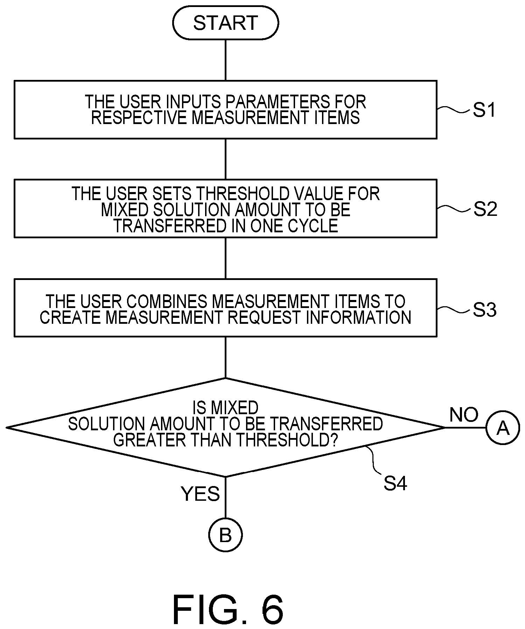

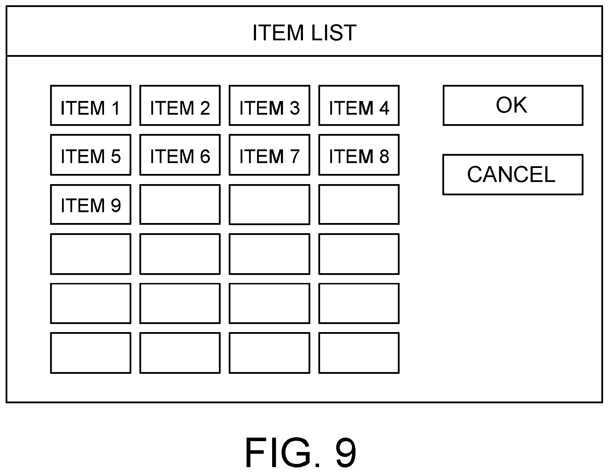

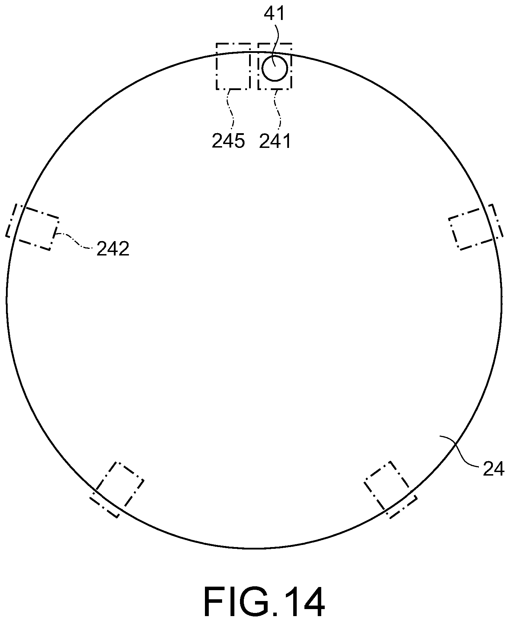

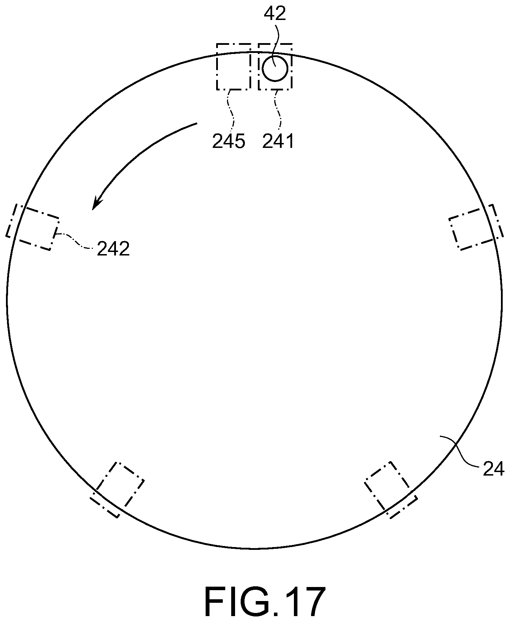

Next, the details of the reaction time-extended measurement will be described with reference to FIGs. 6 to 17. FIGs. 6 to 8 show a flowchart of an example of a dispensing method according to the embodiment. FIGs. 9 to 13 show examples of screens on which the settings of the automatic analyzer 10 are shown. FIGs. 14 to 17 are explanatory drawings showing the transport by the transporter 24 of the reaction tubes 41 and 42. FIGs. 14 to 17 illustrate a top view of the transporter 24.

In this embodiment, first the user inputs parameters for respective measurement items (step S1). The control unit 11 receives the inputs from the user via the operating unit 17. FIG. 9 shows an example of an item list. Specific measurement items are actually displayed in the boxes "Item 1" to "Item 9" in FIG. 9. If the sample is blood, the measurement items may be, for example, Red Blood Cell Count, White Blood Cell Count, Platelet Count, Albumin, ALP, LDH, AST, GLB, and γ-GTP. The user selects parameters to be inputted from the list.

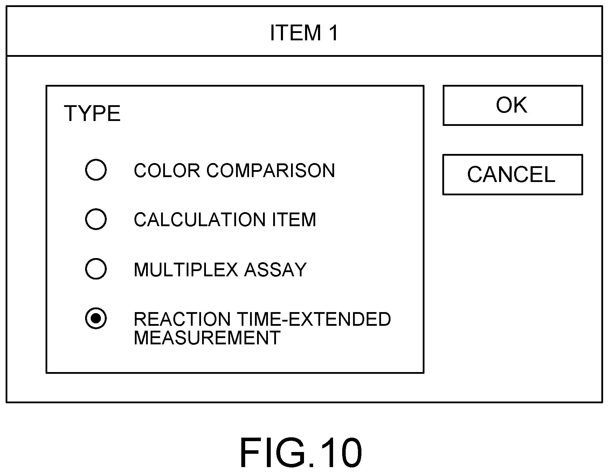

FIG. 10 shows an example of a measurement type selection screen, which is an example of a parameter input screen. If the user selects "Reaction Time-Extended Measurement" on this screen, a reaction time-extended measurement is performed according to the operation sequence shown in FIG. 5. If the user selects one of the other parameters, a measurement is performed according to the operation sequence shown in FIG. 4.

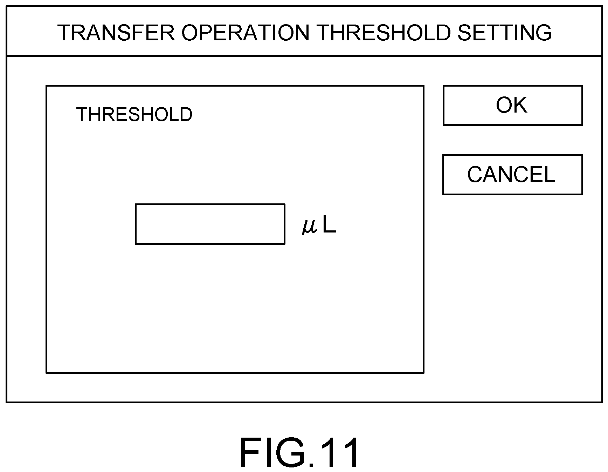

FIG. 11 shows an example of a threshold value setting screen used during a transfer operation. The user may set a threshold value of the amount of the mixed solution in the transfer operation (step S2). The threshold value of the amount of the mixed solution may be set using the measuring item setting screen. In other words, the threshold value of the amount of the mixed solution may be set for each measurement item. The setting screen may be made so that the user may input a desired threshold value, or that the user may select a desired threshold value from a plurality of options. Furthermore, threshold value of the amount of the mixed solution during the transfer operation may be fixed to a predetermined value.

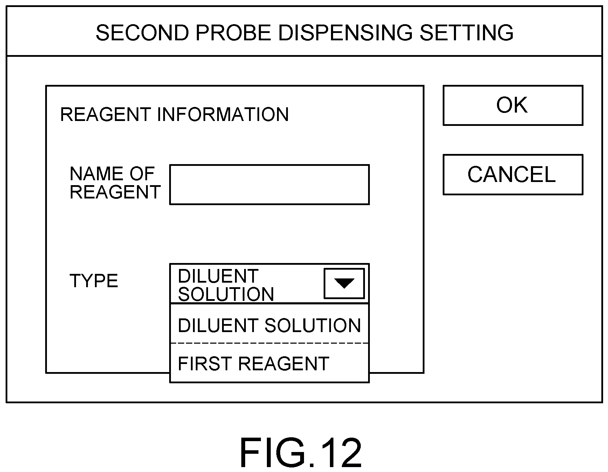

FIG. 12 shows an example of a dispensing setting screen for the second dispensing probe 261. On the screen shown in FIG. 12, whether the first reagent or the diluent solution is dispensed by the second dispensing probe 261 in step S14 (described later) may be set. In this case, the control unit controls the second dispensing probe 261 so as to dispense the first reagent or the diluent solution according to the setting determined by the user. Similarly, whether the first reagent or the second reagent is dispensed by the second dispensing probe 261 in step S18 (described later) may be set. In this case, the control unit controls the second dispensing probe 261 so as to dispense the first reagent or the second reagent according to the setting determined by the user.

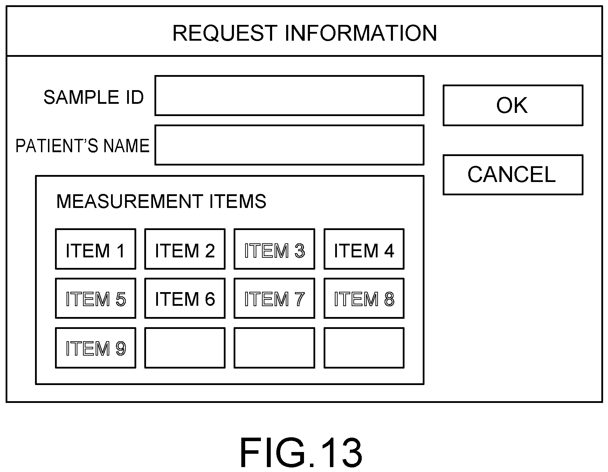

After the parameters are inputted for each measurement item, the user creates measurement request information and instructs the automatic analyzer 10 to perform the measurement. FIG. 13 shows an example of a measurement request screen. In the example shown in FIG. 13, the user inputs a sample ID and a patient's name, and selects one or more measurement items from "Measurement Items." In the example shown in FIG. 13, "Item 1," "Item 2," "Item 4," and "Item 6" may be selected. The user may create the measurement request information by combining the measurement items (step S3). The input of the patient's name may be omitted. Whether the reagent or the diluent solution is dispensed using the second dispensing probe 261 may be selected using the measurement items on the measurement request screen.

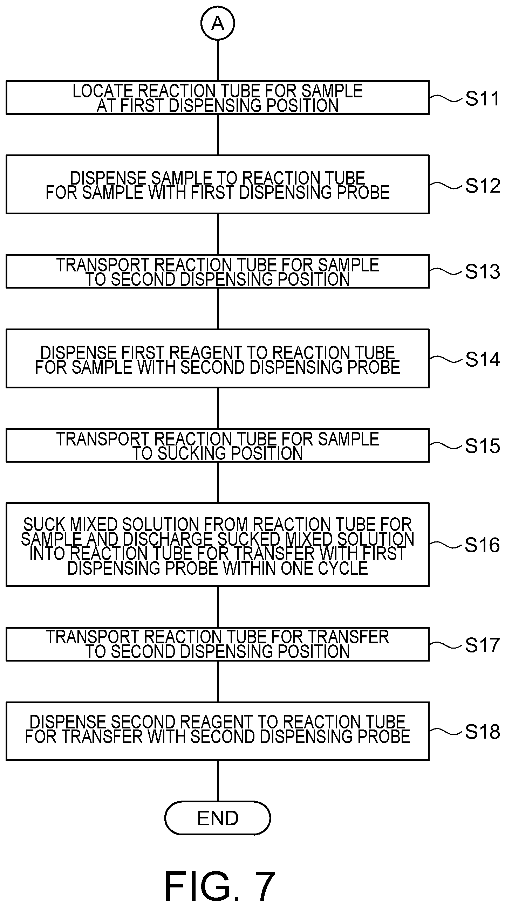

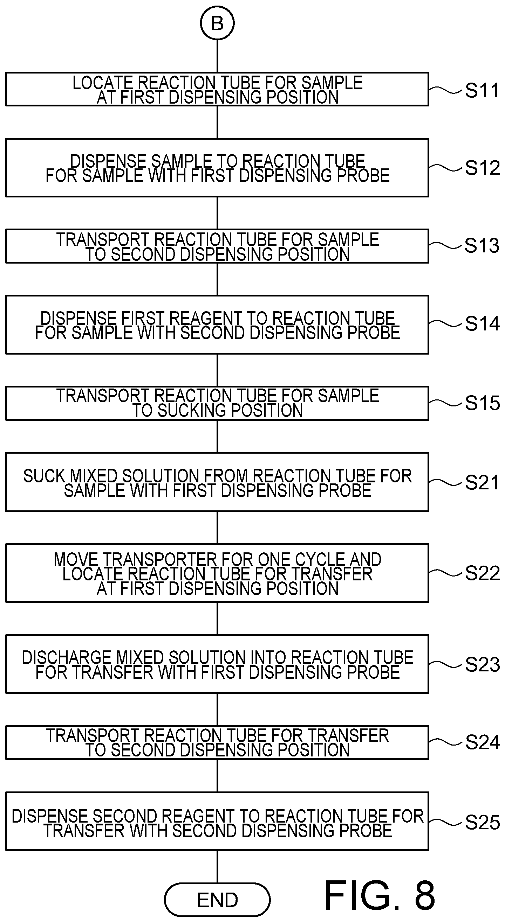

When the measurement is instructed, the control unit 11 calculates the amount of the mixed solution to be transferred from the reaction tube for sample 41 to the reaction tube for transfer 42 based on the inputted parameter(s), and determines whether the calculated amount of the mixed solution is greater than the set threshold value (step S4). In step S4, if the calculated amount of the mixed solution is determined to be equal to or less than the set threshold value ("NO" in step S4), the process proceeds to "A" in FIG. 6 (see FIG. 7). If the calculated amount of the mixed solution is determined to be greater than the set threshold value in step S4 ("YES" in step S4), the process proceeds to "B" in FIG. 6 (see FIG. 8).

The transporter 24, the first dispensing probe 251, and the second dispensing probe 261 are controlled by the control circuitry 110 via the driver 120.

In this embodiment, the reagent rack 35 of the reagent carousel 22 holds the reagent containers 32 storing the first reagent and the reagent containers 33 storing the second reagent. The second dispensing probe 261 is configured to be able to suck the first reagent and the second reagent.

The transporter 24 transports a plurality of reaction tubes 41 and 42. Specifically, the transporter 24 holds the reaction tubes 41 and 42 on a circular line with predetermined intervals. In this embodiment, the transporter 24 is capable of holding the reaction tube for sample 41 and the reaction tube for transfer 42. In the example shown in FIGs. 14 to 17, the transporter 24 transports the reaction tubes 41 and 42 counterclockwise.

A first dispensing position 241, a second dispensing position 242, and a sucking position 245 are set in the transporter 24. At the first dispensing position 241, the first dispensing probe 251 dispenses the mixed solution to the reaction tube for transfer 42. At the second dispensing position 242, the second dispensing probe 261 of the second dispenser 26 dispensing the reagents sucked from the reagent containers 32 and 33 into the reaction tubes 41 and 42. At the second dispensing position 242, the second dispensing probe 261 may dispense the diluent solution to the reaction tube for sample 41. At the sucking position 245, the first dispensing probe 251 sucks the mixed solution from the reaction tube for sample 41.

In the example shown in FIGs. 14 to 17, the sucking position 245 and the first dispensing position 241 are adjacent to each other in the direction of transport by the transporter 24 (the circumferential direction of the reaction disk). The positions are not limited to the above-described positions, and the sucking position 245 and the first dispensing position 241 may not be adjacent to each other in the transport direction. In the illustrated example, the first dispensing position 241 is located in a backward direction (upstream) in the direction of transport by the transporter 24 relative to the sucking position 245. The location is not limited to the above, and the first dispensing position 241 may be located in the forward direction of the direction of transport by the transporter 24 relative to the sucking position 245. In this embodiment, the first dispensing probe 251 is configured to access the sample containers 31 held in the sample disk 21, the reaction tube for sample 41 located at the sucking position 245, and the reaction tube for transfer 42 located at the first dispensing position 241.

The transporter 24 rotates by about 1/5 of the full rotation in one cycle. In other words, the transporter 24 makes about a full rotation with five cycles. After the five cycles, however, the reaction tubes 41 and 42 held in the transporter 24 are shifted from the original positions by the width of one reaction tube in the forward direction. In the illustrated example, after five cycles, the reaction tubes 41 and 42 held in the transporter 24 are at locations shifted by the width of one reaction tube in the forward direction (downstream) from the original positions in the direction of transport. Thus, the positions of the reaction tubes 41 and 42 are shifted by the width of one reaction tube every time about a full rotation (five cycles) is made.

The operation of the automatic analyzer 10 when the calculated amount of the mixed solution is determined to be "NO" in step S4 will be described with reference to FIGs. 7 and 14 to 16. If the judgement in step S4 is "NO," in other words if the control unit 11 determines that the amount of the mixed solution to be transferred from the reaction tube for sample 41 to the reaction tube for transfer 42 is equal to or less than the threshold value, the control unit 11 controls the first dispensing probe 251 so as to suck the mixed solution from the reaction tube for sample 41 and to discharge the sucked mixed solution into the reaction tube for transfer 42 in a single cycle.

In the embodiment, first, the reaction tube for sample 41 located at the first dispensing position 241 (step S11; see FIG. 14). Next, at the first dispensing position 241, the first dispensing probe 251 dispenses the sample into the reaction tube for sample 41 (step S12). In this embodiment, the dispensing of the sample is controlled and performed by the first dispensing function 111 of the control circuitry 110. In more detail, in step S12, first the first dispensing probe 251 moves to a sample container 31 held in the sample disk 21 and sucks a predetermined amount of sample from the sample container 31. Next, the first dispensing probe 251 moves toward the reaction tube for sample 41 at the first dispensing position 241 and discharges (dispenses) the sample into the reaction tube for sample 41. As a result, the reaction tube for sample 41 has the sample therein.

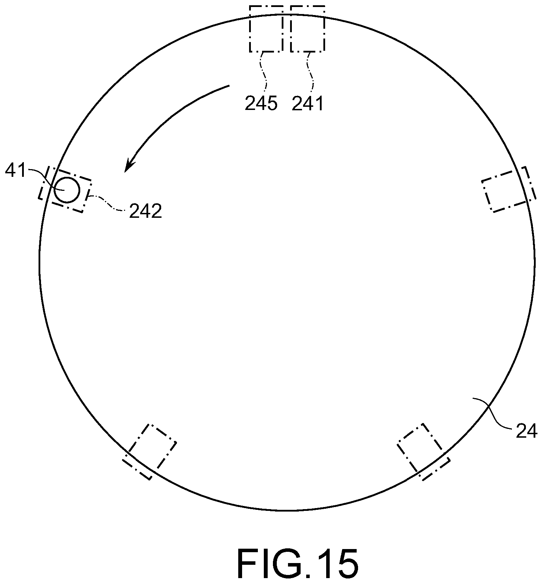

Next, the transporter 24 transports the reaction tube for sample 41 to the second dispensing position 242 (step S13; see FIG. 15). In this embodiment, the transport of the reaction tube for sample 41 is controlled and performed by the reaction tube for sample transport function 113 of the control circuitry 110. In the illustrated example, one cycle after step S11, the reaction tube for sample 41 is positioned at the second dispensing position 242.

Thereafter, at the second dispensing position 242, the second dispensing probe 261 dispenses the first reagent to the reaction tube for sample 41 (step S14). As a result, in the embodiment, the first reagent is dispensed at the same timing as when the diluent solution is dispensed in the example shown in FIG. 4. In the embodiment, the dispensing of the first reagent is controlled and performed by the second dispensing function 112 of the control circuitry 110. In more detail, in step S14, first, the second dispensing probe 261 moves toward a reagent container 32 held in the reagent rack 35 of the reagent carousel 22 and sucks a predetermined amount of the first reagent from the reagent container 32. Next, the second dispensing probe 261 moves toward the reaction tube for sample 41 at the second dispensing position 242 and discharges (dispenses) the first reagent into the reaction tube for sample 41. As a result, the reaction tube for sample 41 contains a mixed solution including the sample and the first reagent.

Thereafter, the transporter 24 transports the reaction tube for sample 41 for the length of one cycle, and the first agitation mechanism 28 agitates the sample and the first reagent in the reaction tube for sample 41.

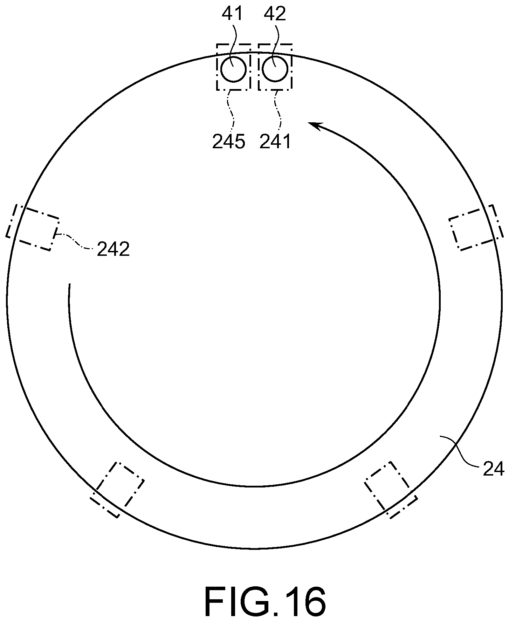

Subsequently, the transporter 24 transports the reaction tube for sample 41 to the sucking position 245 (step S15; see FIG. 16). In the embodiment, the transport of the reaction tube for sample 41 is controlled and performed by the reaction tube for sample transport function 113 of the control circuitry 110. In the illustrated example, four cycles after step S13, the reaction tube for sample 41 is positioned at the sucking position 245.

Next, the first dispensing probe 251 transfers the mixed solution in the reaction tube for sample 41 to the reaction tube for transfer 42 in one cycle (step S16). Specifically, the first dispensing probe 251 sucks the mixed solution from the reaction tube for sample 41 and discharges the sucked mixed solution into the reaction tube for transfer 42. In the embodiment, the transfer of the mixed solution is controlled and performed by the first dispensing function 111 of the control circuitry 110.

Subsequently, the transporter 24 transports the reaction tube for transfer 42 to the second dispensing position 242 (step S17). In the embodiment, the transfer of the reaction tube for transfer 42 is controlled and performed by the reaction tube for transfer transport function 114 of the control circuitry 110. In the illustrated example, one cycle after step S16, the reaction tube for transfer 42 is positioned at the second dispensing position 242.

Thereafter, at the second dispensing position 242, the second dispensing probe 261 dispenses the second reagent to the reaction tube for transfer 42 (step S18). Thus, in the embodiment, the second reagent is dispensed at the timing when the first reagent is dispensed in the example shown in FIG. 4. After sucking the second reagent, the second dispensing probe 261 moves toward the reaction tube for transfer 42 at the second dispensing position 242 and discharges (dispenses) the second reagent into the reaction tube for transfer 42. As a result, the reaction tube for transfer 42 contains the first reagent, the second reagent, and the sample. In the embodiment, the dispensing of the second reagent is controlled and performed by the second dispensing function 112 of the control circuitry 110.

In the following cycle, the agitator 29 agitates the first reagent, the second reagent, and the sample in the reaction tube for transfer 42, and a predetermined time (for example 10 minutes) later, the measuring unit 39 performs the measurement.

Next, the operation of the automatic analyzer 10 in the case of "YES" in step S4 will be described with reference to FIGs. 8, 14, 15, and 17. The detailed descriptions of steps S11 to S15 are omitted since they are the same as steps S11 to S15 having been described with reference to FIG. 7.

In the case of "YES" in step S4, i.e., if the control unit 11 determines that the amount of the mixed solution to be transferred from the reaction tube for sample 41 to the reaction tube for transfer 42 is greater than the threshold value, the control unit 11 controls the first dispensing probe 251 to suck the mixed solution from the reaction tube for sample 41 in a first cycle and to discharge the sucked mixed solution into the reaction tube for transfer 42 in a second cycle.

After the reaction tube for sample 41 is located at the sucking position 245 in step S15, the first dispensing probe 251 sucks the mixed solution from the reaction tube for sample 41 (step S21). In the embodiment, the sucking of the mixed solution is controlled and performed by the first dispensing function 111 of the control circuitry 110.

Next, the transporter 24 transport the reaction tube for transfer 42 to the first dispensing position 241 (step S22). In the embodiment, the transport of the reaction tube for transfer 42 is controlled and performed by the reaction tube for transfer transport function 114 of the control circuitry 110. In the illustrated example, after one cycle passes from step S22, the reaction tube for transfer 42 is located at the first dispensing position 241.

Thereafter, the first dispensing probe 251 discharges (dispenses) the mixed solution sucked in step S21 into the reaction tube for transfer 42 located at the first dispensing position 241 (step S23).

Subsequently, the transporter 24 transports the reaction tube for transfer 42 to the second dispensing position 242 (step S24). In the embodiment, the transport of the reaction tube for transfer 42 is controlled and performed by the reaction tube for transfer transport function 114 of the control circuitry 110. In the illustrated example, after one cycle from step S23, the reaction tube for transfer 42 is located at the second dispensing position 242.

Thereafter, at the second dispensing position 242, the second dispensing probe 261 dispenses the second reagent to the reaction tube for transfer 42 (step S25). Also in this case, the second reagent is dispensed at the timing when the first reagent is dispensed in the example shown in FIG. 4. After sucking the second reagent, the second dispensing probe 261 moves toward the reaction tube for transfer 42 located at the second dispensing position 242, and discharges (dispenses) the second reagent into the reaction tube for transfer 42. As a result, the reaction tube for transfer 42 contains the first reagent, the second reagent, and the sample. In the embodiment, the dispensing of the second reagent is controlled and performed by the second dispensing function 112 of the control circuitry 110.

In the following cycle, the agitator 29 agitates the first reagent, the second reagent, and the sample in the reaction tube for transfer 42, and after a predetermined time (for example, 10 minutes), the measuring unit 39 performs a measurement.

The automatic analyzer 10 according to the embodiment includes the transporter 24 that transports the reaction tube for sample 41 and the reaction tube for transfer 42, the first dispensing probe 251 that dispenses the mixed solution including the sample, the second dispensing probe 261 that dispenses the reagent or the diluent solution, and the control unit 11 that controls the first dispensing probe 251 to suck the mixed solution from the reaction tube for sample 41 in the first cycle and discharge the sucked mixed solution into the reaction tube for transfer 42 in the second cycle if the amount of the mixed solution to be transferred from the reaction tube for sample 41 to the reaction tube for transfer 42 is greater than the threshold value.

In the automatic analyzer 10 according to the embodiment, the control unit 11 controls the first dispensing probe 251 so as to suck the mixed solution from the reaction tube for sample 41 and discharge the sucked mixed solution to the reaction tube for transfer 42 in a single cycle when the amount of the mixed solution to be transferred from the reaction tube for sample 41 to the reaction tube for transfer 42 is equal to or less than the threshold value.

In the automatic analyzer 10 according to the embodiment, the control unit 11 controls the second dispensing probe 261 so as to dispense either the reagent or the diluent solution based on the setting by the user.

In the automatic analyzer 10 according to the embodiment, the control unit 11 controls the second dispensing probe 261 so as to dispense either the first reagent or the second reagent based on the setting by the user.

The automatic analyzer 10 according to the embodiment has a function to set the threshold value for each of the measurement items.

The automatic analyzer 10 according to the embodiment has a function to set which of the reagent and the diluent solution is dispensed by using the second dispensing probe 261.

The automatic analyzer 10 according to the embodiment has a function to use which of the first reagent and the second reagent is dispensed by using the second dispensing probe 261r.

The automatic analyzer 10 according to the embodiment has a function to set the threshold value on the screen for setting each of the measurement items.

The automatic analyzer 10 according to the embodiment has a function to set which of the reagent and the diluent solution is dispensed by using the second dispensing probe 261 on the measurement request screen for setting the respective measurement items.

The method for transferring the mixed solution in the automatic analyzer 10 according to the embodiment is a method for transferring the mixed solution in an automatic analyzer including a transporter configured to transport a reaction tube for sample and a reaction tube for transfer, a first dispensing probe configured to dispense a mixed solution including a sample, and a second dispensing probe for dispensing a reagent or a diluent solution, the method including a transfer step in which if the amount of the mixed solution to be transferred from the reaction tube for sample to the reaction tube for transfer is greater than a threshold value, the mixed solution is sucked from the reaction tube for sample in a first cycle and the sucked mixed solution is discharged into the reaction tube for transfer in a second cycle.

The method for transferring the mixed solution in the automatic analyzer 10 according to the embodiment includes another transfer step in which the mixed solution is sucked from the reaction tube for sample and discharged into the reaction tube for transfer in a single cycle if the amount of the mixed solution to be transferred from the reaction tube for sample to the reaction tube for transfer is equal to or less than the threshold value.

The method for transferring the mixed solution in the automatic analyzer 10 according to the embodiment includes a determination step before the transfer step, in which the control unit of the automatic analyzer determines whether the amount of the mixed solution to be transferred from the reaction tube for sample to the reaction tube for transfer is greater than the threshold value.

According to the automatic analyzer 10 and the method for transferring the mixed solution in the automatic analyzer 10 described above, even if a considerable amount of the mixed solution is to be transferred from the reaction tube for sample 41 to the reaction tube for transfer 42 and the sucking of the mixed solution from the reaction tube for sample 41 and the discharge of the sucked mixed solution into the reaction tube for transfer 42 may not be finished within one cycle, the transfer operation may be appropriately performed. In particular, if the amount of the mixed solution to be transferred is a considerable amount, the first dispensing probe 251 is controlled so that the mixed solution is sucked from the reaction tube for sample 41 in a first cycle and the sucked mixed solution is discharged into the reaction tube for transfer 42 in a second cycle, thereby appropriately performing a transfer operation.

The above-described embodiment may be modified in several ways. Other embodiments will be described below with reference to the drawings. In the following descriptions and the drawings used for supporting the descriptions, elements having substantially the same configurations and functions have the same numerical symbols, and the explanations of such elements are not repeated.

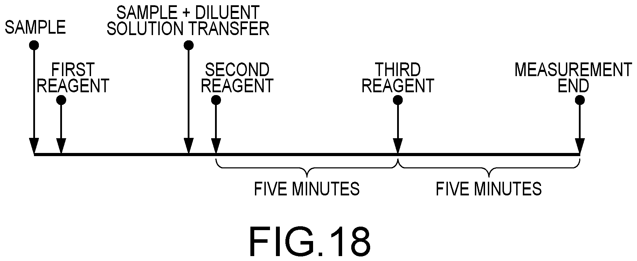

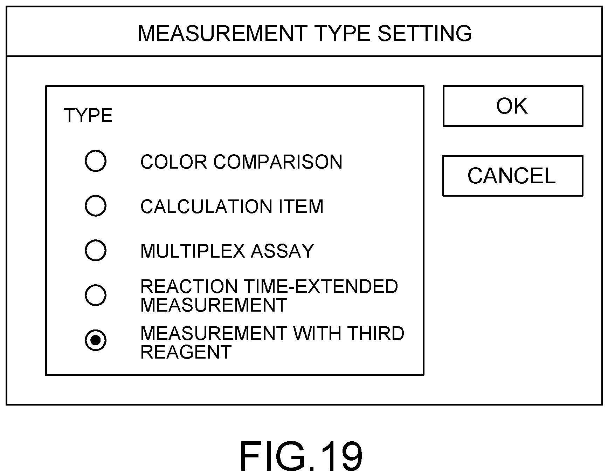

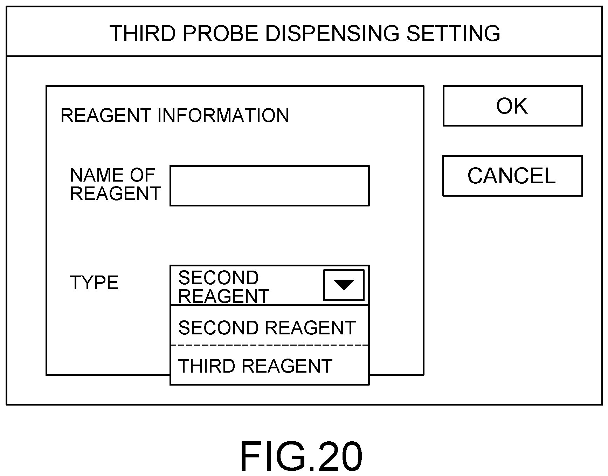

FIG. 18 illustrates another example of an operation sequence of the automatic analyzer 10, in which a third reagent is used. FIGs. 19 and 20 show an example of the setting screen of the automatic analyzer 10 when a measurement using the third reagent is performed.

In the example shown in FIG. 18, the first reagent is dispensed at the timing when the diluent solution is dispensed in the example shown in FIG. 4. The second reagent is dispensed at the timing when the first reagent is dispensed in the example shown in FIG. 4. The third reagent is dispensed at the timing when the second reagent is dispensed in the example shown in FIG. 4. Specifically, one cycle after the sample is dispensed to the reaction tube for sample 41, the first reagent is dispensed to the reaction tube for sample 41. Five cycles (about one full rotation) after the dispensing of the first reagent, the mixed solution including the sample and the first reagent is transferred from the reaction tube for sample 41 to the reaction tube for transfer 42. One more cycle later, the second reagent is dispensed to the reaction tube for transfer 42. About five minutes after the dispensing of the second reagent, the third reagent is dispensed to the reaction tube for transfer 42. About five minutes after the dispensing of the third reagent, the measuring unit 39 performs a measurement. Therefore, in the example shown in FIG. 18, a measurement using three reagents can be performed without changing the time from the dispensing of the sample to the reaction tube for sample 41 to the measurement performed by the measuring unit 39.

FIG. 19 shows an example of a parameter input screen according to the modification of the embodiment. FIG. 19 corresponds to the parameter input screen of the embodiment described by referring to FIG. 10. As an example of the parameter input screen, FIG. 19 shows a measurement type selection screen. If the user selects "Measurement with Third Reagent" in this input screen, a measurement using the third reagent is performed according to the operation sequence shown in FIG. 18. If the user selects a parameter other than "Measurement with Third Reagent" in this input screen, a measurement is performed according to the operation sequence shown in FIG. 4 or 5.

As another modification, the third dispensing probe 271 of the third dispenser 27 may suck the third reagent and discharge the sucked third reagent into the reaction tubes 41 and 42 containing the sample or the mixed solution. For this purpose, the control circuitry 110 may have a third dispensing function. The third dispensing function is performed by executing a program stored in the storage circuity 118. The third dispensing function controls the third dispensing probe 271 to dispense the third reagent to the reaction tubes 41 and 42. For example, when the third dispensing function is performed, the control circuitry 110 controls the third dispensing probe 271 so that the third reagent in the reagent container is dispensed to at least one of the reaction tubes 41 and 42. The third dispensing function may correspond to a third dispenser.

In the example shown in FIG. 9, the user may open a screen for editing parameters of the existing items or a screen for inputting parameters with respect to an item to be newly added from the screen showing the list of items.

In the example shown in FIG. 12, if the diluent solution is selected as "Type," for example, the dispensing may be performed according to the operation sequence shown in FIG. 4, and if the first reagent is selected as "Type," the dispensing may be performed according to the operation sequence shown in FIG. 5.

The user may select one of "Diluent Solution," "First Reagent," and "Second Reagent" as "Type" in the example shown in FIG. 12.

The term "processor" in the above descriptions means circuitry such as a central processing unit (CPU), a graphics processing unit (GPU), an application specific integrated circuit (ASIC), a programmable logic device like a simple programmable logic device (SPLD) or a complex programmable logic device (CPLD), and a field programmable gate array (FPGA). If the processor is a CPU, for example, the processor performs a function by reading a program stored in storage circuity. If the processor is an ASIC, for example, the processor has the function realized as a logic circuit directly included in the circuitry of the processor instead of being stored in the storage circuity. The processor of one or more embodiments is not limited to be a single circuit, but may be a combination of a plurality of independent circuits formed as a single processor to perform one or more processing functions. The components shown in FIG. 1 may be implemented to a single processor to perform processing functions.

While certain embodiments have been described, these embodiments have been presented by way of example only, and are not intended to limit the scope of the inventions. Indeed, a variety of other forms such as omissions, substitutions, changes and combinations may be made in the embodiments without departing from the spirit of the inventions. Such embodiments are intended to be covered by the scope and spirit of the inventions as well as the claimed inventions and their equivalents.

## Claims

1. An automatic analyzer (10) comprising:
a transporter (24) configured to transport a reaction tube for sample (41) and a reaction tube for transfer (42);
a first dispensing probe (251) configured to dispense a mixed solution including a sample;
a second dispensing probe (261) configured to dispense a reagent or a diluent solution; and
a control unit (11) configured to control the first dispensing probe (251) so as to suck the mixed solution from the reaction tube for sample (41) in a first cycle and to discharge the mixed solution into the reaction tube for transfer (42) in a second cycle if an amount of the mixed solution to be transferred from the reaction tube for sample (41) to the reaction tube for transfer (42) is greater than a threshold value.

2. The automatic analyzer (10) according to claim 1, wherein the control unit (11) controls the first dispensing probe (251) so as to suck the mixed solution from the reaction tube for sample (41) and to discharge the mixed solution into the reaction tube for transfer (42) in a single cycle if the amount of the mixed solution to be transferred from the reaction tube for sample (41) to the reaction tube for transfer (42) is equal to or less than the threshold value.

3. The automatic analyzer (10) according to claim 1 or 2, wherein the control unit (11) controls the second dispensing probe (261) so as to dispense either the reagent or the diluent solution according to a user's setting.

4. The automatic analyzer (10) according to any one of claims 1 to 3, wherein the control unit (11) controls the second dispensing probe (261) so as to dispense either a first reagent or a second reagent according to a user's setting.

5. The automatic analyzer (10) according to any one of claims 1 to 4 configured to have a function to set the threshold value for each of measurement items.

6. The automatic analyzer (10) according to any one of claims 1 to 5 configured to have a function to dispense either the reagent or the diluent solution using the second dispensing probe (261).

7. The automatic analyzer (10) according to any one of claims 1 to 6 configured to have a function to set whether a first reagent or a second reagent is dispensed using the second dispensing probe (261).

8. The automatic analyzer (10) according to any one of claims 1 to 7 configured to have a function to set the threshold value on a settings screen for setting measurement items.

9. The automatic analyzer (10) according to claim 3 configured to have a function to set whether the reagent or the diluent solution is dispensed using the second dispensing probe (261) on a measurement request screen for setting measurement items.

10. A method for transferring a mixed solution in an automatic analyzer (10) including:
a transporter (24) configured to transport a reaction tube for sample (41) and a reaction tube for transfer (42);
a first dispensing probe (251) configured to dispense a mixed solution including a sample; and
a second dispensing probe (261) configured to dispense a reagent or a diluent solution, the method comprising:
a transferring step including:
sucking the mixed solution from the reaction tube for sample (41) in a first cycle and discharging the mixed solution into the reaction tube for transfer (42) in a second cycle if an amount of the mixed solution to be transferred from the reaction tube for sample (41) to the reaction tube for transfer (42) is greater than a threshold value.

11. The method for transferring the mixed solution in the automatic analyzer (10) according to claim 10, further comprising:
another transferring step including:
sucking the mixed solution from the reaction tube for sample (41) and discharging the mixed solution into the reaction tube for transfer (42) in a single cycle if the amount of the mixed solution to be transferred from the reaction tube for sample (41) to the reaction tube for transfer (42) is equal to or less then the threshold value.

12. The method for transferring the mixed solution in the automatic analyzer (10) according to claim 10 or 11, further comprising:
a determining step performed by a control unit (11) included in the automatic analyzer (10) before the transferring step, the determining step including:
determining whether the amount of the mixed solution to be transferred from the reaction tube for sample (41) to the reaction tube for transfer (42) is greater than the threshold value.
